# EUROPEAN PATENT APPLICATION

(11) **EP 2 985 676 A1**
(43) Date of publication of application: **17.02.2016**
(21) Application number: 14783254.7
(22) Date of filing: 04.04.2014
(51) Int. Cl.: G06F 3/033

(54) **TELEVISION-AND-COMPUTER ALL-IN-ONE MACHINE, METHOD, AND COMPUTER STORAGE MEDIUM FOR PERFORMING REMOTE CONTROL ON EXTERNAL COMPUTER**

(30) Priority: 07.04.2013 CN 201310118651
(71) Applicant: Guangzhou Shirui Electronics Co., Ltd., Guangzhou, Guangdong 510663 (CN)
(72) Inventor: PANG, Yuanyang, Guangzhou Guangdong 510663 (CN)
(74) Representative: Legg, Cyrus James Grahame
(86) International application number: PCT/CN2014/074832
(87) International publication number: WO 2014/166365

(57) **Abstract**

Provided are a television-and-computer all-in-one machine for performing remote control on an external computer, and a method and a computer storage medium for performing remote control on an external computer. The television-and-computer all-in-one machine comprises a television module, a control module, and an on/off switching module. The television module is connected to the on/off switching module by using the control module. The television module is used for receiving a remote control signal. When the remote control signal comprises a computer remote control signal and an on/off signal, the television module sends the computer remote control signal to the control module. The control module is used for simulating the computer remote control signal into a keyboard or mouse signal. The on/off switching module is used for receiving the on/off signal, and switches and is connected to the control module and a built-in computer, or the control module and the external computer. According to the method, the control module is connected to the on/off switching module, and the on/off switching module is connected to a built-in computer and the external computer, so as to control the external computer in a remote control manner.

## Description

### FIELD

The present invention relates generally to multimedia technologies, and more particularly, to a television-and-computer all-in-one machine, method, and computer storage medium for performing remote control on external computer.

### BACKGROUND

At present, with the development of technologies, the demand of the television is becoming greater than ever before, which has given rise to all-in-one machines combining a television and a computer, that is, a television-and-computer all-in-one machine.

A traditional television-and-computer all-in-one machine includes a television module, a remote control receiving module, a MCU module and a computer module. The remote control receiving module is adapted to receive a remote control signal and transmit the remote control signal to the television module for processing. If the television-and-computer all-in-one machine is currently in a television mode, the television module may process the received remote control signal. If the television-and-computer all-in-one machine is currently in a computer mode, the television module may process the received remote control signal and transmit the processed signal to the MCU module. The MCU module may process the received signal to simulate a signal of a keyboard or mouse, and transmit the simulated signal to the computer module via a USB interface, allowing the computer module to be operated.

However, it is difficult for a traditional infrared remote controller to implement both the control of the television system and the control of the computer system, and when an external computer is used to input display signals into the television-and-computer all-in-one machine, the remote controller is unable to control the external computer.

### SUMMARY

Based on the above, in view of the problem existing in the prior art that the remote controller is unable to operate the external computer, it is necessary to provide a television-and-computer all-in-one machine and method for performing remote control on an external computer.

A television-and-computer all-in-one machine for performing remote control on an external computer includes a television module, a control module and a switching module, wherein, the television module is connected to the switching module via the control module, and
wherein the television module is configured to receive a remote control signal, when the remote control signal contains a computer control signal and a switching signal, the television module is configured to transmit the computer control signal to the control module, the control module is configured to simulate a signal of a keyboard or mouse by the computer control signal, and the switching module is configured to receive the switching signal to switch between a connection between the control module and an internal computer and a connection between the control module and an external computer.

A method for performing remote control on an external computer includes:
receiving a remote control signal; and
when the remote control signal contains a computer control signal and a switching signal, translating the computer control signal to a serial of keyboard or mouse events, connecting to an internal computer or an external computer based on the switching signal, and transmitting the simulated signal of the keyboard or mouse to the internal computer or the external computer.

The above television-and-computer all-in-one machine and method for performing remote control on an external computer can realize remote control of the external computer by writing a program of simulating the remote control signal as a signal of a keyboard or mouse into the control module, connecting the control module with the switching module, and connecting the switching module with the internal computer and the external computer.

### BRIEF DESCRIPTION OF THE DRAWINGS

FIG. 1 is a schematic diagram illustrating a television-and-computer all-in-one machine for performing remote control on an external computer according to Embodiment One of the present invention.
FIG. 2 is a schematic diagram illustrating a television-and-computer all-in-one machine for performing remote control on an external computer according to Embodiment Two of the present invention.

### DETAILED DESCRIPTION OF THE PREFERRED EMBODIMENTS

Preferred embodiments of the present invention will be described in detail with reference to the drawings.

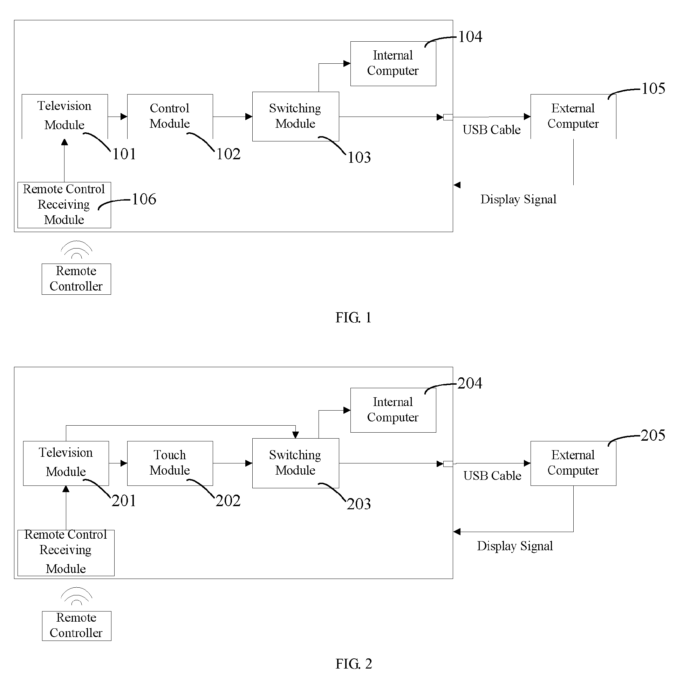

As shown in FIG. 1, a television-and-computer all-in-one machine for performing remote control on an external computer according to Embodiment One of the present invention is illustrated, including a television module 101, a control module 102 and a switching module 103, wherein, the television module 101 is connected to the switching module 103 via the switching module 102.

The television module 101 is configured to receive a remote control signal. When the remote control signal contains a computer control signal and a switching signal, the computer control signal is transmitted to the control module 102 by the television module 101, the control module 102 is configured to simulate the computer control signal as a signal of a keyboard or mouse and the switching module 103 is configured to receive the switching signal to switch between a connection between the control module and an internal computer 104 and a connection between the control module and an external computer 105.

In the embodiment, the control module may receive a switching signal from the television module, and transmit the switching signal to the switching module. The remote control of the internal and external computers can be achieved by connecting the control module with the switching module and connecting the switching module with the internal computer or the external computer. It should be understood that the technical solution further includes an internal computer 104, an external computer 105 and a remote control receiving module 106. The remote control receiving module 106 is connected to the television module 101 and configured to receive a remote control signal and transmit the remote control signal to the television module 101. The process will be described in detail as follows.

A remote controller may send an operating instruction to the remote control receiving module by an infrared emitter. It will be appreciated that any other appropriate means, other than the infrared emitter, can be used in the remote controller to send the operating instruction. The remote control receiving module may receive the remote control signal, process the remote control signal and transmit the processed remote control signal to the television module. The signal from the remote control receiving module can be identified directly by the television module. The television module may communicate with the control module through serial port or USB (when the control module is not limited to only one USB communication, the control module can communicate with the television module through USB), so that the control module can be controlled by the television module. In the present technical solution, the USB port of the control module can be simulated as a common HID device, so as to simulate a keyboard or mouse to operate the connected computer. Under the control of the remote control signal, the USB signal of the control module may be switched to be transmitted to the internal computer or to be transmitted to the external computer by the USB switching module. Techniques for simulation of a keyboard or mouse are well known in the art and will therefore not be discussed in detail here.

When the control signal is a television remote control signal, the remote control receiving module may receive the remote control signal, process the remote control signal and transmit the processed remote control signal to the television module. The television module may perform corresponding actions to control the television system.

When the control signal is an external computer control signal, the remote control receiving module may inform the television module based on the received remote control signal. The television module may transmit the remote control signal to the control module through serial port communication. The control module may control the USB switching module to be switched to a USB port of the television-and-computer all-in-one machine, and the control module may be connected to a USB port of the external computer via a cable connected between the USB switching module and the USB port of the external computer. The USB port may be simulated as a keyboard or mouse to operate the external computer accordingly according to the instruction.

When the control signal is an internal computer control signal, the remote control receiving module may inform the television module based on the received remote control signal. The television module may transmit the remote control signal to the control module through serial port communication. The control module may control the USB switching module to be switched to a USB port of the internal computer, and the USB port may be simulated as a keyboard or mouse to operate the internal computer accordingly according to the instruction.

In the embodiment, the control module may be a MCU module which has a function of simulating a keyboard or mouse. The remote control of the external computer can be achieved by the connection between the MCU module and the switching module.

As shown in FIG. 2, a television-and-computer all-in-one machine for performing remote control on an external computer according to Embodiment Two of the present invention is illustrated, including a television module 201, a touch module 202 and a switching module 203, wherein, the television module 201 is connected to the touch module 202 and the switching module 203 respectively, and the switching module 203 is connected to the touch module 202.

The television module 201 is configured to receive a remote control signal. When the remote control signal contains a computer control signal and a switching signal, the television module 201 transmits the switching signal to the switching module 203. The switching module 203 is configured to receive the switching signal, and switch between a connection of the touch module and an internal computer 204 and a connection between the touch module and an external computer 205 based on the switching signal. The television module 201 transmits the computer control signal to the touch module 202. The touch module 202 is configured to simulate the remote control signal as a signal form a keyboard or mouse, to implement the control of the internal computer or the external computer.

In the embodiment, a program of simulating a keyboard or mouse is written into a touch frame. The touch module may be a USB device. The touch frame as a component to be connected with a touch device itself can switch the USB signal to a corresponding device when switching between channels of the internal computer and the external computer, so it is more appropriate for the touch frame to implement the actions of simulating the key board or mouse, which can add a function of the television-and-computer all-in-one machine to perform remote control on the external computer while achieve the touch control of the internal and external computers. The switching signal may be transmitted to the switching module via the television module, or may be transmitted to the switching module via the touch frame. The process will be described in detail as follows.

A remote controller may send an operating instruction to the remote control receiving module by an infrared emitter. It will be appreciated that any other appropriate means, other than the infrared emitter, can be used in the remote controller to send the operating instruction. The remote control receiving module may receive the remote control signal, process the remote control signal and transmit the processed remote control signal to the television module. The signal from the remote control receiving module can be identified directly by the television module. When the remote control signal includes a computer control signal and a switching, the television module may control the switching module based on the switching signal, and the switching module may switch between a connection between the touch module and the internal computer and a connection between the touch module and the external computer based on the switching signal. The television module may communicate with the touch module through serial port or USB (when the touch module is not limited to only one USB communication, the touch module can communicate with the television module through USB), so that the touch module can be controlled by the television module. In the present technical solution, the USB port of the touch module can be simulated as a common HID device, so as to simulate a keyboard or mouse to operate the connected computer. Under the control of the remote control signal, the USB signal of the touch module may be switched to be transmitted to the internal computer or to be transmitted to the external computer by the USB switching module. Techniques for simulation of a keyboard or mouse are well known in the art and will therefore not be discussed in detail here.

When the control signal is a television remote control signal, the remote control receiving module may receive the remote control signal, process the remote control signal and transmit the processed remote control signal to the television module. The television module may perform corresponding actions to control the television system.

When the control signal includes a computer control signal and an external computer switching signal, the remote control receiving module may inform the television module based on the received remote control signal. The television module may control the USB switching module to be switched to a USB port of the television-and-computer all-in-one machine, and the touch module may be connected to a USB port of the external computer via a cable connected between the USB switching module and the USB port of the external computer. The television module may transmit the computer control signal to the touch module through serial port communication, and the USB port may be simulated as a keyboard or mouse by the touch module based on the instruction, to operate the external computer accordingly.

When the control signal includes a computer control signal and an internal computer switching signal, the remote control receiving module may inform the television module based on the received remote control signal. The television module may control the USB switching module to be switched to a USB port of the internal computer, and transmit the remote control signal to the touch module through serial port communication. The USB port may be simulated as a keyboard or mouse by the touch module based on the instruction, to operate the internal computer accordingly.

A method for performing remote control on an external computer is also provided, including:
receiving a remote control signal; and
when the remote control signal contains a computer control signal and a switching signal, translating the computer control signal to a serial of keyboard or mouse events, connecting to an internal computer or an external computer based on the switching signal, and transmitting the simulated signal of the keyboard or mouse to the internal computer or the external computer.

As mentioned, the specific process will therefore not be discussed in detail here.

It will be appreciated for those skilled in the art that parts of or overall process and corresponding devices or units in the above embodiments can be implemented by related hardware controlled by computer program, the computer program can be stored in a computer-readable storage medium, and when the computer program is executed, it can include the processes of the above embodiments of each method. Wherein, the non-transitory computer-readable storage medium can be a disc, a compact disc, a Read-Only Memory or a Random Access Memory. Thus, according to the above embodiments of the present invention, a computer-readable storage medium is further provided. When the computer program stored in the computer-readable storage medium is executed, it can implement any of the above methods for performing remote control on an external computer.

The methods in the embodiments according to the present invention as mentioned above can be in a form of software and installed in a corresponding device, and the process of performing remote control on the external computer can be implemented by related process unit controlled by the software when the software is running. The above process unit may be arranged or installed in a corresponding terminal device, or itself may be a corresponding terminal device accordingly, such as mobile phone, tablet computer, PDA (Personal Digital Assistant), POS (Point of Sales), onboard computer or any other terminal devices.

It should be noted that the singular forms "a", "an" and "the" are intended to include the plural forms as well, unless the context clearly indicates otherwise. The order in which various described method steps are performed may often be changed in alternative embodiments, and in other alternative embodiments one or more method steps may be skipped altogether.

The above are preferred embodiments of the invention described in detail, and should not be deemed as limitations to the scope of the present invention. It should be noted that variations and improvements will become apparent to those skilled in the art to which the present invention pertains without departing from its spirit and scope. Therefore, the scope of the present invention is defined by the appended claims.

## Claims

1. A television-and-computer all-in-one machine for performing remote control on an external computer, **characterized by** comprising a television module, a control module and a switching module, the television module being connected to the switching module via the control module,
wherein the television module is configured to receive a remote control signal; when the remote control signal contains a computer control signal and a switching signal, the television module is configured to transmit the computer control signal to the control module, the control module is configured to simulate a signal of a keyboard or mouse by the computer control signal, and the switching module is configured to receive the switching signal to switch between a connection between the control module and an internal computer and a connection between the control module and an external computer.

2. The television-and-computer all-in-one machine of claim 1, **characterized in that** the control module is configured to receive the switching signal from the television module, and transmits the switching signal to the switching module.

3. The television-and-computer all-in-one machine of claim 1, **characterized in that** the television module is connected to the switching module, and the television module is configured to transmit the switching signal to the switching module.

4. The television-and-computer all-in-one machine of any of claims 1 to 3, **characterized in that** the control module is further configured to perform touch control of a display screen.

5. The television-and-computer all-in-one machine of any of claims 1 to 3, **characterized in that** the television module communicates with the control module through serial port or USB.

6. The television-and-computer all-in-one machine of claim 4, **characterized in that** the television module communicates with the control module through serial port or USB.

7. The television-and-computer all-in-one machine of any of claims 1 to 3, **characterized in that** the television-and-computer all-in-one machine further comprises: an internal computer, an external computer and a remote control receiving module,
wherein the remote control receiving module is connected to the television module and configured to receive the remote control signal and transmit the remote control signal to the television module.

8. The television-and-computer all-in-one machine of claim 4, **characterized in that** the television-and-computer all-in-one machine further comprises: an internal computer, an external computer and a remote control receiving module,
wherein the remote control receiving module is connected to the television module and configured to receive the remote control signal and transmit the remote control signal to the television module.

9. The television-and-computer all-in-one machine of claim 5, **characterized in that** the television-and-computer all-in-one machine further comprises: an internal computer, an external computer and a remote control receiving module,
wherein the remote control receiving module is connected to the television module and configured to receive the remote control signal and transmit the remote control signal to the television module.

10. A method for performing remote control on an external computer, **characterized by** comprising:
receiving a remote control signal; and
when the remote control signal contains a computer control signal and a switching signal, translating the computer control signal to a serial of keyboard or mouse events, connecting to an internal computer or an external computer based on the switching signal, and transmitting the simulated signal of the keyboard or mouse to the internal computer or the external computer.

11. A computer-readable storage medium storing computer-executable instructions which, when executed, causing a computer to perform a method for performing remote control on the external computer of claim 10.
